# EUROPEAN PATENT APPLICATION

(11) **EP 4 834 972 A1**
(43) Date of publication of application: **04.11.2026**
(21) Application number: 24912607.9
(22) Date of filing: 19.12.2024
(51) Int. Cl.: C08G 65/336, C08K 5/17, C08L 71/02, C09D 171/02, C09J 171/02

(54) **REACTIVE SILICON GROUP-CONTAINING POLYOXYALKYLENE DERIVATIVE, PRODUCTION METHOD THEREFOR, CURABLE COMPOSITION, AND CURED PRODUCT**

(30) Priority: 28.12.2023 JP 2023222100
(71) Applicant: SHIN-ETSU CHEMICAL CO., LTD., Tokyo 100-0005 (JP)
(72) Inventor: TAKAGI, Kazunori, Annaka-shi, Gunma 379-0224 (JP); YAMADA, Tetsuro, Annaka-shi, Gunma 379-0224 (JP); HIROKAMI, Munenao, Annaka-shi, Gunma 379-0224 (JP); YASUDA, Shigeki, Annaka-shi, Gunma 379-0224 (JP)
(74) Representative: Mewburn Ellis LLP
(86) International application number: PCT/JP2024/044950
(87) International publication number: WO 2025/142718

(57) **Abstract**

This reactive silicon group-containing polyoxyalkylene derivative in which one or both terminals of a polyoxyalkylene chain are blocked with a group represented by structural formula (1) has good curability even if an amine-based compound is used as a curing catalyst, and gives a cured product having excellent yellowing resistance and heat resistance. 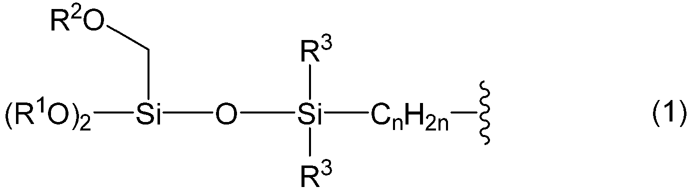 (In the formula, R¹ and R² each independently represent a hydrogen atom, a C1-10 aliphatic saturated hydrocarbon group or a C6-10 aryl group, each R³ independently represents a C1-10 aliphatic saturated hydrocarbon group or a C6-10 aryl group, and n is an integer of 2-12. The wavy line represents a bond.)

## Description

### TECHNICAL FIELD

The present invention relates to a reactive silicon group-containing polyoxyalkylene derivative, a method for producing the same, a curable composition, and a cured product and, more particularly, to a polyoxyalkylene derivative having, as the reactive silicon group-containing group, an organosilicon group capable of forming a siloxane bond through reaction, a method for producing the same, a curable composition, and a cured product.

### BACKGROUND ART

Reactive silicon groups, particularly alkoxysilyl groups, are capable of undergoing hydrolytic condensation in the presence of water, and therefore polymers having such reactive silicon groups can be used as curable compositions that undergo crosslinking and curing in the presence of water or moisture.

Among these polymers, a polymer having a main chain including a polyoxyalkylene group is generally known as a modified silicone. A curable composition using the modified silicone is liquid at room temperature and is characterized by its ability to cure into a rubber elastomer. Due to this property, the curable composition is widely used for coating agents, adhesives, and sealants for building applications.

Various proposals have been made for methods for producing a polymer having a reactive silicon group at a molecular chain end, and some such polymers have already been industrially produced.

Known examples of such polymers include a polyoxypropylene derivative including alkoxysilyl groups bonded to both ends of the molecular chain, and room temperature-curable compositions using these polymers as base resins (base polymers) are also known (Patent Documents 1 and 2).

However, the room temperature-curable compositions disclosed in Patent Documents 1 and 2 are less reactive with moisture in air, and their curability is insufficient. Therefore, to ensure sufficient curability at room temperature, it is generally indispensable to add a catalyst such as an organotin-based compound. However, one concern with such organotin-based compounds is their toxicity to humans and the environment.

To improve the reactivity, Patent Document 3 discloses an alkoxysilyl-terminated polymer obtained by reacting, for example, a hydroxy-terminated polymer with isocyanate silane.

Although the reactivity of the compound in Patent Document 3 is high, significant coloration occurs over time because urethane or urea bonds are present in its molecule, and therefore yellowing resistance and heat resistance are insufficient. Other problems include the use of the highly toxic low-boiling point isocyanate silane during the production of the terminated polymer and the potential formation of similar low-boiling point isocyanate silanes due to thermal decomposition of the urethane or urea bonds at high temperature.

Patent Document 4 discloses that, by using a polyoxyalkylene derivative having a sulfide-methylene bond as the linking group between a terminal alkoxysilyl group and the polyoxyalkylene main chain, a cured product having fast curability, high yellowing resistance, and low toxicity due to the absence of isocyanate silane can be obtained even when an amine-based compound is used as the curing catalyst instead of the organotin compounds. The reactivity of the compound in Patent Document 4 is high when the amine catalyst is used. However, one problem with this compound is that the cured product is softened due to cleavage of the sulfide-methylene-silicon bonds at high temperature.

### PRIOR ART DOCUMENTS

### PATENT DOCUMENTS

Patent Document 1: JP-A 2004-099908
Patent Document 2: JP-A 2010-209205
Patent Document 3: JP-A 2004-518801
Patent Document 4: JP-A 2017-141450

### SUMMARY OF INVENTION

### TECHNICAL PROBLEM

The present invention has been made in view of the foregoing circumstances, and it is an object of the invention to provide a reactive silicon group-containing polyoxyalkylene derivative that exhibits good curability even when an amine-based compound is used as a curing catalyst and that forms a cured product having high yellowing resistance and high heat resistance and to provide a method for producing the polyoxyalkylene derivative.

### SOLUTION TO PROBLEM

The present inventors have conducted extensive studies to solve the foregoing problems and found that a polyoxyalkylene derivative having a chain end terminated with a reactive silicon group, i.e., a silyl group to which an organoxymethyl group and two organoxy groups are bonded, exhibits good curability even when an amine-based compound is used as a curing catalyst and can form a cured product having high yellowing resistance and high heat resistance, and thus the invention has been completed.

Accordingly, the present invention provides the following.
1. A reactive silicon group-containing polyoxyalkylene derivative having a polyoxyalkylene chain terminated at one or both ends with a group represented by the following structural formula (1): 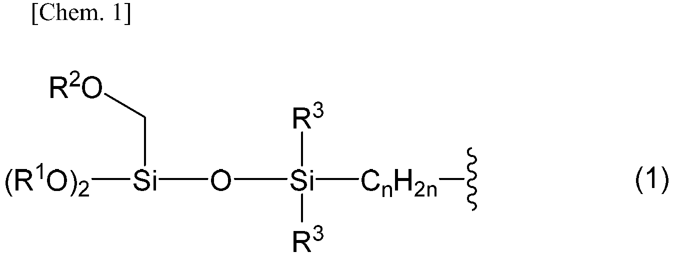 (wherein R¹ and R² each independently represent a hydrogen atom, a saturated aliphatic hydrocarbon group having 1 to 10 carbon atoms, or an aryl group having 6 to 10 carbon atoms; each R³ independently represents a saturated aliphatic hydrocarbon group having 1 to 10 carbon atoms or an aryl group having 6 to 10 carbon atoms; n is an integer from 2 to 12; and the wavy line represents a bonding site).
2. The reactive silicon group-containing polyoxyalkylene derivative according to 1, wherein the reactive silicon group-containing polyoxyalkylene derivative has a number average molecular weight of 200 to 50,000.
3. A method for producing the reactive silicon group-containing polyoxyalkylene derivative according to 1, the method including reacting a disiloxane compound represented by the following formula (4) with an alkenyl group-containing polyoxyalkylene derivative having a polyoxyalkylene chain terminated at one or both ends with an alkenyl group having 2 to 12 carbon atoms: 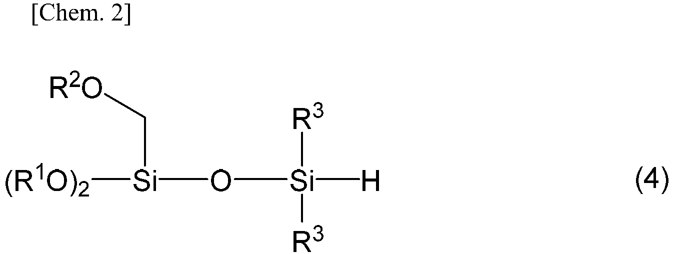 (wherein R¹, R², and R³ have the same meanings as defined above).
4. The method for producing the reactive silicon group-containing polyoxyalkylene derivative according to 3, wherein the reactive silicon group-containing polyoxyalkylene derivative has a number average molecular weight of 200 to 50,000.
5. A curable composition including: (A) the reactive silicon group-containing polyoxyalkylene derivative according to 1; and (B) a curing catalyst.
6. The curable composition according to 5, wherein the curing catalyst (B) is an amine-based compound.
7. A cured product obtained by curing the curable composition according to 5 or 6.
8. A coating agent composition including: (A) the reactive silicon group-containing polyoxyalkylene derivative according to 1; and (B) a curing catalyst.
9. The coating agent composition according to 8, wherein the curing catalyst (B) is an amine-based compound.
10. An article including a coating layer formed by curing the coating agent composition according to 8 or 9.
11. An adhesive composition including: (A) the reactive silicon group-containing polyoxyalkylene derivative according to 1; and (B) a curing catalyst.
12. The adhesive composition according to 11, wherein the curing catalyst (B) is an amine-based compound.
13. An article including a bonding layer formed by curing the adhesive composition according to 11 or 12.

### ADVANTAGEOUS EFFECTS OF INVENTION

The reactive silicon group-containing polyoxyalkylene derivative of the invention has, at a molecular end, a specific reactive silicon group, i.e., a silyl group to which an organoxymethyl group and two organoxy groups are bonded. Therefore, even when an amine-based compound is used instead of an organotin compound as a curing catalyst, the polyoxyalkylene derivative exhibits good curability and forms a cured product having high yellowing resistance and high heat resistance.

The reactive silicon group-containing polyoxyalkylene derivative of the invention having these characteristics can be preferably used as a base resin (base polymer) for coating agents, adhesives, sealants, etc.

### DESCRIPTION OF EMBODIMENTS

The present invention will next be described more specifically.

The reactive silicon group-containing polyoxyalkylene derivative of the invention has a polyoxyalkylene chain terminated at one or both ends with a group represented by the following structural formula (1):

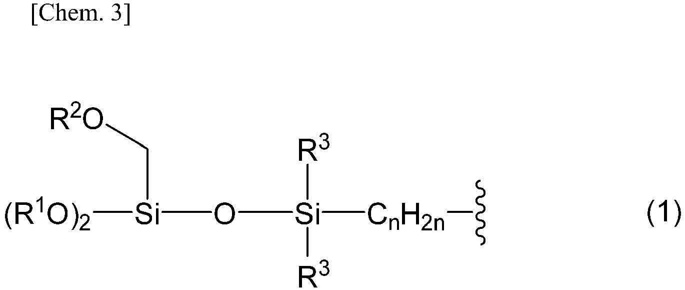

In formula (1), R¹ and R² each independently represent a hydrogen atom, a saturated aliphatic hydrocarbon group having 1 to 10 carbon atoms, or an aryl group having 6 to 10 carbon atoms, and each R³ independently represents a saturated aliphatic hydrocarbon group having 1 to 10 carbon atoms or an aryl group having 6 to 10 carbon atoms.

The saturated aliphatic hydrocarbon group having 1 to 10 carbon atoms represented by each of R¹, R², and R³ may be linear, cyclic, or branched, and specific examples thereof include: linear and branched alkyl groups such as methyl, ethyl, n-propyl, i-propyl, n-butyl, s-butyl, t-butyl, n-pentyl, neopentyl, n-hexyl, n-heptyl, n-octyl, n-nonyl, and n-decyl groups; and cycloalkyl groups such as cyclopropyl, cyclobutyl, cyclopentyl, cyclohexyl, cycloheptyl, and cyclooctyl groups.

Specific examples of the aryl group having 6 to 10 carbon atoms represented by each of R¹, R², and R³ include phenyl, tolyl, xylyl, α-naphthyl, and β-naphthyl groups.

Some or all of the hydrogen atoms in any of these groups may each be substituted with a halogen atom such as F, Cl, or Br or a cyano group, and specific examples of the substituted groups include a 3-chloropropyl group, a 3,3,3-trifluoropropyl group, and a 2-cyanoethyl group.

In particular, R¹, R², and R³ are each preferably a methyl group, an ethyl group, or a phenyl group and are each more preferably a methyl group in terms of curability, productivity, and cost.

In formula (1), n is an integer from 2 to 12. In terms of reactivity, n is preferably 2 to 8, more preferably 2 to 3, and still more preferably 2.

No particular limitation is imposed on the reactive silicon group-containing polyoxyalkylene derivative of the invention so long as it is a compound having a polyoxyalkylene skeleton terminated at one or both ends with the group represented by formula (1) above. From the viewpoint of the curability and the mechanical properties of a cured product to be obtained, it is preferable that the polyoxyalkylene skeleton is terminated at both ends with the group represented by formula (1) above.

Therefore, the reactive silicon group-containing polyoxyalkylene derivative of the invention is preferably a polyoxyalkylene derivative represented by the following structural formula (2): 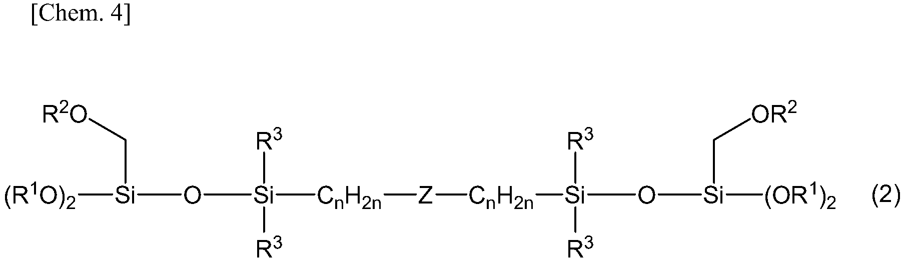 (wherein R¹, R², R³, and n have the same meanings as defined above).

In formula (2), Z represents a polyoxyalkylene structure represented by the following formula (3): 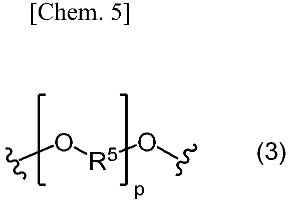 (wherein each wavy line represents a bonding site).

In formula (3), R⁵ represents a divalent hydrocarbon group having 1 to 14 carbon atoms, and p represents an integer of 1 or more. When a plurality of R⁵s are present (p is 2 or more), they may be the same or different.

The divalent hydrocarbon group represented by R⁵ is preferably a linear or branched alkylene group having 1 to 14 carbon atoms, and examples thereof include methylene, ethylene, propylene, trimethylene, tetramethylene, isobutylene, pentamethylene, hexamethylene, heptamethylene, and octamethylene groups.

In particular, R⁵ is particularly preferably a linear or branched alkylene group having 2 to 4 carbon atoms such as a methylene, ethylene, trimethylene, propylene, tetramethylene, or isobutylene group.

Specific examples of the repeating unit (-OR⁵-) in formula (3) above include oxyalkylene groups such as -OCH₂-, -OCH₂CH₂-, -OCH₂CH₂CH₂-, -OCH(CH₃)CH₂-, -OCH₂CH₂CH₂CH₂-, -OCH(CH₂CH₃)CH₂-, and -OC(CH₃)₂CH₂-.

In formula (3), p is a number of 1 or more. From the viewpoint of the mechanical properties of a cured product to be obtained and the workability of the composition, p is preferably 5 to 700, more preferably 10 to 500, and still more preferably 20 to 300.

The main skeleton of the oxyalkylene group-containing organosilicon compound of the invention may include one type of repeating unit or two or more types of repeating units. In particular, when the reactive silicon group-containing polyoxyalkylene derivative is used for materials of coating agents, adhesives, sealants, etc., it is preferable that the polyoxyalkylene derivative includes oxypropylene (-OCH(CH₃)CH₂-) units, from the viewpoint of durability.

No particular limitation is imposed on the number average molecular weight of the oxyalkylene group-containing organosilicon compound of the invention. In order to adjust the viscosity etc. of a curable composition containing the compound within appropriate ranges to improve its workability and in order to impart sufficient curability, the number average molecular weight is preferably 200 to 50,000 and more preferably 1,000 to 20,000.

The number average molecular weight in the invention is a polystyrene-equivalent value determined by gel permeation chromatography (GPC) analysis (the same applies to the following).

No particular limitation is imposed on the viscosity of the reactive silicon group-containing polyoxyalkylene derivative of the invention. In order to adjust the viscosity etc. of a curable composition containing the compound within appropriate ranges to improve its workability and in order to impart sufficient curability, the viscosity is preferably 10 to 100,000 mPa·s, more preferably 50 to 50,000 mPa·s, and still more preferably 100 to 10,000 mPa·s.

The viscosity is a value measured at 25°C using a B-type rotational viscometer.

The reactive silicon group-containing polyoxyalkylene derivative of the invention can be obtained by subjecting a polyoxyalkylene having a molecular chain terminated at one or both ends with an alkenyl group having 2 to 12 carbon atoms (this polyoxyalkylene may be hereinafter referred to also as an "alkenyl group-containing polyoxyalkylene derivative") and a disiloxane compound represented by formula (4) to a hydrosilylation reaction in the presence of a platinum group metal catalyst in air or in an inert gas such as nitrogen: 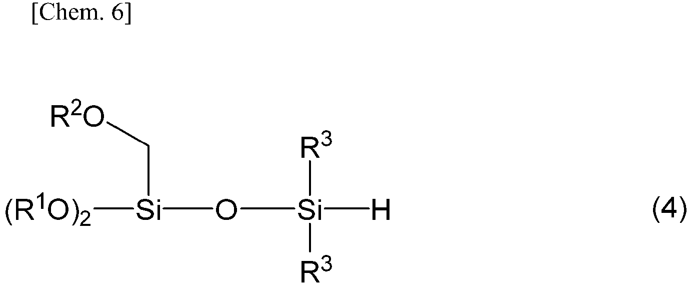 (wherein R¹, R², and R³ have the same meanings as defined above).

Specific examples of the disiloxane compound represented by formula (4) above include, but are not limited to, compounds represented by the following structural formulas. In particular, a disiloxane compound represented by formula (6) is preferred.

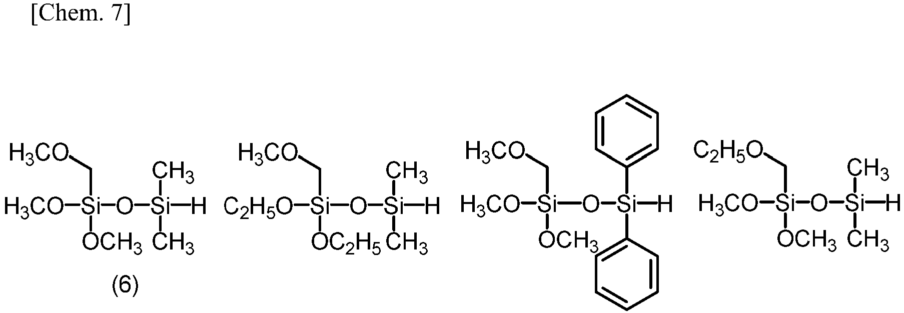

The disiloxane compound represented by formula (4) above is obtained, for example, by subjecting an organoxysilane represented by the following formula (7) and a disiloxane compound represented by the following formula (8) to an equilibration reaction in the presence of an acid and water: 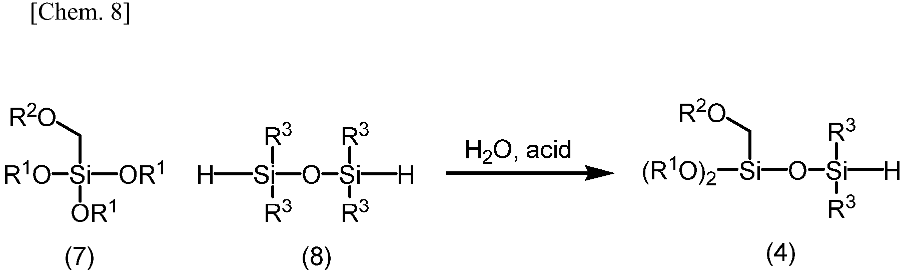 (wherein R¹, R², and R³ have the same meanings as defined above).

No particular limitation is imposed on the alkenyl group-containing polyoxyalkylene derivative so long as it is a compound having a polyoxyalkylene skeleton terminated at one or both ends with an alkenyl group having 2 to 12 carbon atoms. From the viewpoint of its curability and the mechanical properties of a cured product to be obtained, it is preferable to use a compound represented by the following formula (5) and having a polyoxyalkylene skeleton terminated at both ends with an alkenyl group having 2 to 12 carbon atoms. 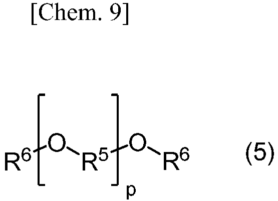 (wherein R⁵ and p have the same meanings as defined above).

In formula (5), each R⁶ is an alkenyl group having 2 to 12 carbon atoms.

The alkenyl group having 2 to 12 carbon atoms is preferably a linear or branched alkenyl group having 2 to 8 carbon atoms. Specific examples thereof include vinyl, 1-propenyl, allyl, isopropenyl, 1-butenyl, 2-butenyl, 3-butenyl, 1-methyl-2-propenyl, 2-methyl-1-propenyl, 1-pentenyl, 2-pentenyl, 3-pentenyl, 4-pentenyl, 1-methyl-3-butenyl, 2-methyl-3-butenyl, 3-methyl-3-butenyl, 1,1-dimethyl-2-propenyl, 1,2-dimethyl-2-propenyl, 3-methyl-2-butenyl, 2-methyl-2-butenyl, 1-ethyl-2-propenyl, 2-ethyl-2-propenyl, 1-methyl-4-pentenyl, 1-hexenyl, 2-hexenyl, 3-hexenyl, 4-hexenyl, 5-hexenyl, 1-heptenyl, 2-heptenyl, 3-heptenyl, 4-heptenyl, 5-heptenyl, 6-heptenyl, 1-methyl-6-heptenyl, 1-octenyl, 2-octenyl, 3-octenyl, 4-octenyl, 5-octenyl, 6-octenyl, and 7-octenyl groups.

Of these, a vinyl group or an allyl group is preferred, and a vinyl group is more preferred.

Specific examples of the alkenyl group-containing polyoxyalkylene derivative include, but are not limited to, those represented by the following structural formulas: 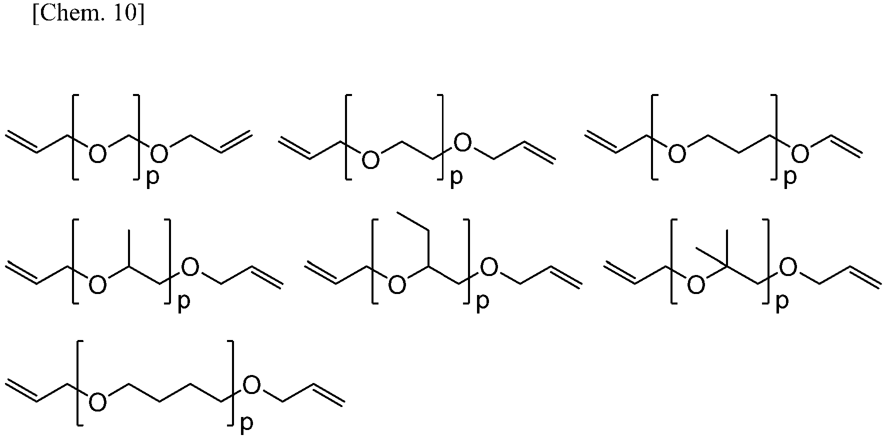 (wherein p has the same meaning as defined above).

No particular limitation is imposed on the number average molecular weight of the alkenyl group-containing polyoxyalkylene derivative. In order to adjust the viscosity etc. of a curable composition containing the compound within appropriate ranges to improve its workability and in order to impart sufficient curability, the number average molecular weight is preferably 200 to 50,000 and more preferably 1,000 to 20,000.

To reduce the formation of byproducts during the hydrosilylation reaction and to improve the storage stability and properties of a polyoxyalkylene compound to be obtained, the reaction ratio of the alkenyl group-containing polyoxyalkylene derivative to the disiloxane compound represented by formula (4) above is adjusted such that the number of hydrosilyl groups in the disiloxane compound represented by formula (4) is preferably 0.8 to 2.5 and more preferably 0.9 to 2.0 per alkenyl group in the alkenyl group-containing polyoxyalkylene derivative.

No particular limitation is imposed on the platinum group metal catalyst used for the hydrosilylation reaction. Specific examples thereof include chloroplatinic acid, an alcohol solution of chloroplatinic acid, a toluene or xylene solution of a platinum-1,3-divinyl-1,1,3,3-tetramethyldisiloxane complex, tetrakis(triphenylphosphine)platinum, dichlorobis(triphenylphosphine)platinum, dichlorobis(acetonitrile)platinum, dichlorobis(benzonitrile)platinum, dichloro(cyclooctadiene)platinum, and supported catalysts such as platinum-carbon, platinum-alumina, and platinum-silica.

Of these, platinum(0) complexes are preferred from the viewpoint of selectivity during hydrosilylation, and a toluene or xylene solution of a platinum-1,3-divinyl-1,1,3,3-tetramethyldisiloxane complex is more preferred.

No particular limitation is imposed on the amount of the platinum group metal catalyst used. The weight ratio of the platinum group metal to the total weight of the alkenyl group-containing organopolysiloxane and the disiloxane compound represented by formula (4) above is preferably 0.1 to 1,000 ppm and more preferably 0.3 to 100 ppm from the viewpoint of reactivity, productivity, etc.

The hydrosilylation reaction may be performed under solvent-free conditions. However, if necessary, the hydrosilylation reaction may be performed in an organic solvent such as toluene, isopropyl alcohol, or methanol so long as the reaction is not impaired.

No particular limitation is imposed on the reaction temperature of the hydrosilylation reaction. The reaction temperature is preferably 0 to 200°C, more preferably 40 to 110°C, and still more preferably 60 to 100°C. When a solvent is used, it is preferable to perform the reaction within the range of 0°C to the boiling point of the solvent.

No particular limitation is imposed on the reaction time. The reaction time is generally 1 to 60 hours and preferably 1 to 24 hours.

The curable composition of the invention (hereinafter referred to as the composition) contains at least the reactive silicon group-containing polyoxyalkylene derivative (A) described above and a curing catalyst (B).

Since the composition of the invention contains the reactive silicon group-containing polyoxyalkylene derivative of the invention, the composition exhibits good curability and forms a cured product having yellowing resistance and heat resistance.

The curing catalyst (B) is a component that promotes the hydrolytic condensation reaction of the hydrolyzable groups contained in the reactive silicon group-containing polyoxyalkylene derivative (A) with moisture in air to thereby facilitate the curing of the composition and is added to ensure efficient curing of the composition.

No particular limitation is imposed on the curing catalyst so long as it is a curing catalyst used to cure general moisture condensation curable compositions. Specific examples thereof include: alkyl tin compounds such as dibutyltin oxide and dioctyltin oxide; alkyltin ester compounds such as dibutyltin diacetate, dibutyltin dilaurate, dioctyltin dilaurate, dibutyltin dioctoate, dioctyltin dioctoate, and dioctyltin diversatate; titanates, titanium chelate compounds, and partial hydrolysates thereof such as tetraisopropoxytitanium, tetra-n-butoxytitanium, tetrakis(2-ethylhexoxy)titanium, dipropoxybis(acetylacetonato)titanium, titanium diisopropoxy bis(ethylacetoacetate), and titanium isopropoxyoctylene glycol; organometallic compounds such as zinc naphthenate, zinc stearate, zinc-2-ethyloctoate, iron-2-ethylhexoate, cobalt-2-ethylhexoate, manganese-2-ethylhexoate, cobalt naphthenate, aluminum trihydroxide, aluminum alcoholates, aluminum acylates, salts of aluminum acylates, aluminosiloxy compounds, and aluminum chelate compounds; aminoalkyl-substituted alkoxysilanes such as 3-aminopropyltrimethoxysilane, 3-aminopropyltriethoxysilane, 3-aminopropylmethyldimethoxysilane, 3-aminopropylmethyldiethoxysilane, N-β(aminoethyl)γ-aminopropyltrimethoxysilane, N-β(aminoethyl)γ-aminopropyltriethoxysilane, N-β(aminoethyl)γ-aminopropylmethyldimethoxysilane, N-β(aminoethyl)γ-aminopropylmethyldiethoxysilane, bis[3-(trimethoxysilyl)propyl]amine, bis[3-(triethoxysilyl)propyl]amine, N,N'-bis[3-(trimethoxysilyl)propyl]ethane-1,2-diamine, N,N'-bis[3-(triethoxysilyl)propyl]ethane-1,2-diamine, and N-phenyl-3-aminopropyltrimethoxysilane; amine compounds and salts thereof such as hexylamine and dodecylamine phosphate; quaternary ammonium salts such as benzyltriethylammonium acetate; lower fatty acid salts of alkali metals such as potassium acetate, sodium acetate, and lithium oxalate; dialkylhydroxylamines such as dimethylhydroxylamine and diethylhydroxylamine; guanidino group-containing silanes and siloxanes such as 2-[3-(trimethoxysilyl)propyl]-1,1,3,3-tetramethylguanidine, 2-[3-(methyldimethoxysilyl)propyl]-1,1,3,3-tetramethylguanidine, 2-[3-(triethoxysilyl)propyl]-1,1,3,3-tetramethylguanidine, 2-[3-(methyldiethoxysilyl)propyl]-1,1,3,3-tetramethylguanidine, and 2-[3-(tris(trimethylsiloxy)silyl)propyl]-1,1,3,3-tetramethylguanidine; and phosphazene base-containing silanes and siloxanes such as N,N,N',N',N",N"-hexamethyl-N"'-[3-(trimethoxysilyl)propyl]-phosphorimidic triamide. Any one of these may be used alone, or two or more may be used in combination.

Of these, dioctyltin dilaurate, dioctyltin diversatate, tetraisopropoxytitanium, tetra-n-butoxytitanium, titanium diisopropoxy bis(ethylacetoacetate), 3-aminopropyltrimethoxysilane, N-β(aminoethyl)γ-aminopropyltrimethoxysilane, bis[3-(trimethoxysilyl)propyl]amine, N,N'-bis[3-(trimethoxysilyl)propyl]ethane-1,2-diamine, and 2-[3-(trimethoxysilyl)propyl]-1,1,3,3-tetramethylguanidine are preferred because of their higher reactivity, and dioctyltin dilaurate, dioctyltin diversatate, 3-aminopropyltrimethoxysilane, and 2-[3-(trimethoxysilyl)propyl]-1,1,3,3-tetramethylguanidine are more preferred from the viewpoint of the curability of the composition. To avoid the use of an organotin-based compound to thereby further reduce toxicity, 3-aminopropyltrimethoxysilane and 2-[3-(trimethoxysilyl)propyl]-1,1,3,3-tetramethylguanidine are still more preferred, and 2-[3-(trimethoxysilyl)propyl]-1,1,3,3-tetramethylguanidine is particularly preferred from the viewpoint of the curability of the composition.

No particular limitation is imposed on the amount of the curing catalyst added. To adjust the curing speed within an appropriate range to thereby improve the workability, the amount of the curing catalyst added is preferably 0.01 to 15 parts by weight and more preferably 0.1 to 5 parts by weight based on 100 parts by weight of the reactive silicon group-containing organopolysiloxane (A).

Preferably, the composition of the invention is a solvent-free composition containing substantially no organic solvent (most organic solvents are harmful to humans and flammable). However, a solvent may be added to the composition used, depending on the intended application and the required workability. The term "substantially" means that the amount of the solvent contained in the composition is 1% by weight or less and particularly 0.1% by weight or less.

No particular limitation is imposed on the solvent so long as it can dissolve the component (A). Specific examples thereof include: hydrocarbon-based solvents such as pentane, hexane, heptane, octane, decane, and cyclohexane; aromatic-based solvents such as benzene, toluene, and xylene; amide-based solvents such as formamide, N,N-dimethylformamide, pyrrolidone, and N-methylpyrrolidone; ester-based solvents such as ethyl acetate, butyl acetate, γ-butyrolactone, and propylene glycol-1-monomethyl ether-2-acetate; ketone-based solvents such as acetone, methyl ethyl ketone, and methyl isobutyl ketone; and ether-based solvents such as diethyl ether, dibutyl ether, cyclopentyl methyl ether, tetrahydrofuran, and 1,4-dioxane. One of these may be used alone, or two or more may be used in combination.

Various additives such as an adhesion improver, inorganic and organic ultraviolet absorbers, a storage stability improver, a plasticizer, a filler, a pigment, and a perfume may be added to the composition of the invention according to the intended purpose.

By applying the composition of the invention described above to the surface of a solid base and curing the composition to form a coating layer, a coated solid base is obtained. By applying the adhesive composition of the invention to the surface of a solid base, stacking another solid base onto the applied composition, and curing the composition to form a bonding layer, a bonded layered body is obtained.

No particular limitation is imposed on the method for applying the composition. Specific examples of the method include well-known methods such as spray coating, spin coating, dip coating, roller coating, brush coating, bar coating, and flow coating, and any of them may be appropriately selected and used.

No particular limitation is imposed on the material and shape of the solid base. Specific examples of the solid base include: organic resin bases formed of epoxy resins, phenolic resins, polyimide resins, polycarbonate resins such as polycarbonates and polycarbonate blends, acrylic-based resins such as poly(methyl methacrylate), polyester resins such as poly(ethylene terephthalate), poly(butylene terephthalate), and unsaturated polyester resins, polyamide resins, acrylonitrile-styrene copolymer resins, styrene-acrylonitrile-butadiene copolymer resins, polyvinyl chloride resins, polystyrene resins, blends of polystyrene and polyphenylene ether, cellulose acetate butyrate, and polyethylene resins; metal bases such as iron sheets, copper sheets, and steel sheets; paint-coated surfaces; glass; ceramics; concrete; slate boards; textiles; inorganic fillers such as wood materials, stone materials, tiles, (hollow) silica, titania, zirconia, and alumina; and glass fiber products such as glass fibers, glass clothes, glass tapes, glass mats, and glass paper.

When the composition of the invention comes into contact with moisture in the atmosphere, a hydrolytic condensation reaction of the reactive silicon group-containing polyoxyalkylene derivative (A) proceeds. The indicator of the moisture in the atmosphere is humidity, and the humidity may be any value within the range of 10 to 100%RH. Generally, the higher the humidity, the faster the hydrolysis proceeds. Therefore, moisture may be optionally added to the atmosphere.

The curing reaction temperature and time can be appropriately changed according to various factors such as the base used, the moisture concentration, the catalyst concentration, and the type of hydrolysable group. Generally, the curing reaction temperature is preferably about 10°C to about 40°C from the viewpoint of workability etc. To facilitate the curing reaction, the composition may be cured under heating to a temperature lower than the heatproof temperature of the base used. The curing reaction time is generally about 1 minute to about 1 week from the viewpoint of workability etc.

### EXAMPLES

The present invention will next be more specifically described by way of Synthesis Examples, Examples, and Comparative Examples. However, the invention is not limited to these Examples.

In the following description, the viscosity is a value measured at 25°C using a B-type rotational viscometer, and the molecular weight and the degree of polymerization (the number of oxyalkylene repeating units) are a polystyrene-equivalent number average molecular weight and a number average polymerization degree determined by GPC (gel permeation chromatography) measurement.

### [1] Synthesis of disiloxane compounds

### [Synthesis Example 1] Synthesis of disiloxane compound a

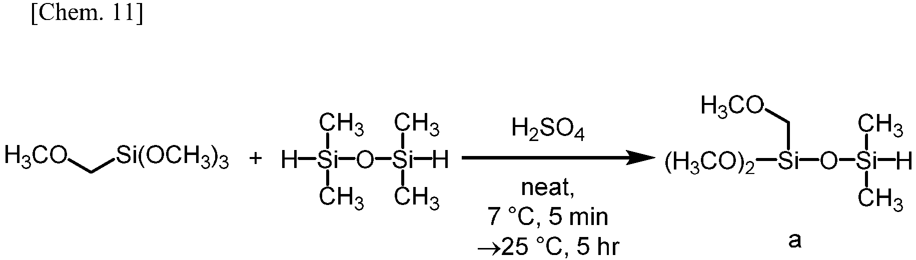

A 300 mL separable flask equipped with a stirrer, a reflux condenser, and a thermometer was charged with 200 g of trimethoxy(methoxymethyl)silane and 40.4 g of 1,1,3,3-tetramethyldisiloxane, and 1.2 g of concentrated sulfuric acid (98% by weight) was added dropwise at 7°C with stirring. After completion of the dropwise addition, the mixture was stirred at 25°C for 5 hours. Then, 6 g of KYOWAAD (registered trademark) 500SH (manufactured by Kyowa Chemical Industry Co., Ltd.) was added, and the resulting mixture was stirred for 1 hour. Then, the mixture was filtered to collect the reaction solution, and the reaction solution was distilled (distillation temperature: 90°C, the degree of vacuum: 17 kPa) to thereby obtain a disiloxane compound a.
¹H-NMR (CDCl₃): δ 4.46 to 4.61 ppm (s, 1H, -SiH), 3.41 to 3.34 ppm (s, 9H, -Si(OCH₃)₂, -OCH₃), 3.15 to 3.13 ppm (s, 2H, -CH₂-), 0.00 to 0.02 ppm (s, 6H, -SiCH₃)

### [Synthesis Example 2] Synthesis of disiloxane compound b

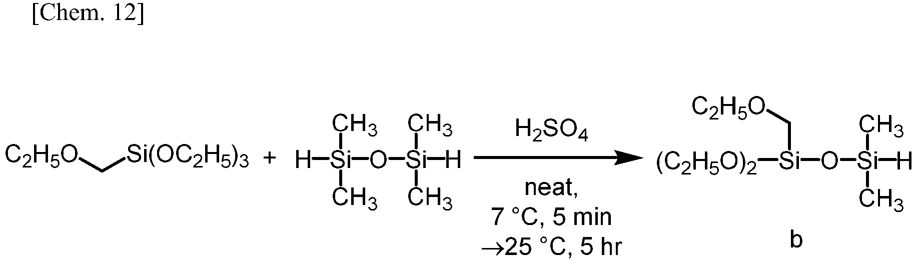

A 300 mL separable flask equipped with a stirrer, a reflux condenser, and a thermometer was charged with 268 g of triethoxy(ethoxymethyl)silane and 40.4 g of 1,1,3,3-tetramethyldisiloxane, and then 1.2 g of concentrated sulfuric acid (98% by weight) was added dropwise at 7°C with stirring. After completion of the dropwise addition, the mixture was stirred at 25°C for 5 hours. Then, 6 g of KYOWAAD (registered trademark) 500SH (manufactured by Kyowa Chemical Industry Co., Ltd.) was added, and the resulting mixture was stirred for 1 hour. Then, the mixture was filtered to collect the reaction solution, and the reaction solution was distilled (distillation temperature: 90°C, the degree of vacuum: 17 kPa) to thereby obtain a disiloxane compound b.
¹H-NMR (CDCl₃): δ 4.46 to 4.61 ppm (s, 1H, -SiH), 3.85 to 3.63 ppm (m, 6H, -OCH₂-), 1.41 to 1.34 ppm (m, 9H, -CH₃), 0.00 to 0.02 ppm (s, 6H, -SiCH₃)

### [Synthesis Example 3] Synthesis of disiloxane compound c

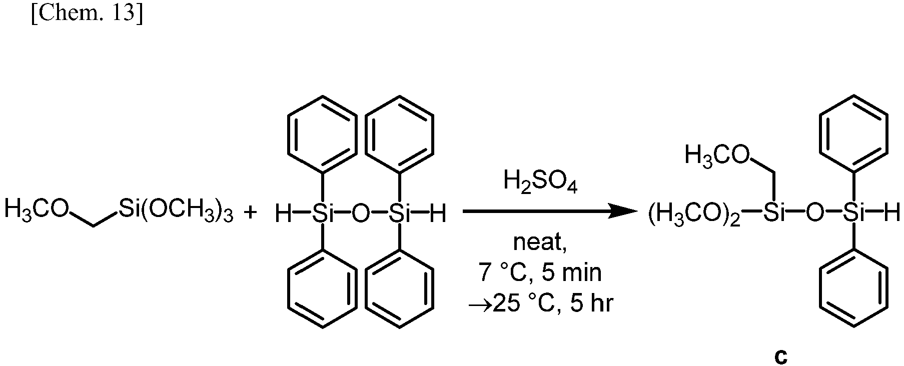

A 300 mL separable flask equipped with a stirrer, a reflux condenser, and a thermometer was charged with 200 g of trimethoxy(methoxymethyl)silane and 115 g of 1,1,3,3-tetraphenyldisiloxane, and 1.2 g of concentrated sulfuric acid (98% by weight) was added dropwise at 7°C with stirring. After completion of the dropwise addition, the mixture was stirred at 25°C for 5 hours. Then, 6 g of KYOWAAD (registered trademark) 500SH (manufactured by Kyowa Chemical Industry Co., Ltd.) was added, and the resulting mixture was stirred for 1 hour. Then, the mixture was filtered to collect the reaction solution, and the reaction solution was distilled (distillation temperature: 90°C, the degree of vacuum: 17 kPa) to thereby obtain a disiloxane compound c.
¹H-NMR (CDCl₃): δ 7.58 to 7.32 ppm (m, 10H, -SiC₆H₅), 4.46 to 4.61 ppm (s, 1H, -SiH), 3.41 to 3.34 ppm (s, 9H, -Si(OCH₃)₂, -OCH₃), 3.15 to 3.13 ppm (s, 2H, -CH₂-)

### [2] Synthesis of reactive silicon group-containing polyoxyalkylene derivatives

### [Example 1-1] Synthesis of reactive silicon group-containing polyoxyalkylene derivative A-1

A 200 mL separable flask equipped with a stirrer, a reflux condenser, and a thermometer was charged with 100 g of α,ω-diallyl-terminated polypropylene glycol having a number average molecular weight 5,100 (corresponding to 0.07 moles in terms of terminal allyl functional groups) and a toluene solution of a platinum-1,3-divinyl-1,1,3,3-tetramethyldisiloxane complex (in an amount of 50 ppm in terms of platinum), and the mixture was heated to 60°C. 27 g of the disiloxane compound a obtained in Synthesis Example 1 (corresponding to 0.11 moles in terms of hydrosilyl functional groups) was added to the mixture, and the resulting mixture was stirred at 60°C for 2 hours. The reaction was judged complete when the peaks corresponding to the allyl groups in the raw materials had completely disappeared in ¹H-NMR measurement and the peaks corresponding to the target substance were detected. After completion of the reaction, the solvent was removed by evaporation at 100°C and a degree of vacuum of 1.3 kPa for 3 hours to thereby obtain a reactive silicon group-containing polyoxyalkylene derivative A-1.

The obtained reactive silicon group-containing polyoxyalkylene derivative A-1 was a light yellow transparent liquid having a number average molecular weight of 6,000 and a viscosity of 500 mPa·s.

### [Example 1-2] Synthesis of reactive silicon group-containing polyoxyalkylene derivative A-2

A 200 mL separable flask equipped with a stirrer, a reflux condenser, and a thermometer was charged with 100 g of α,ω-diallyl-terminated polypropylene glycol having a number average molecular weight of 7,800 (corresponding to 0.039 moles in terms of terminal allyl functional groups) and a toluene solution of a platinum-1,3-divinyl-1,1,3,3-tetramethyldisiloxane complex (in an amount of 50 ppm in terms of platinum), and the mixture was heated to 60°C. 15 g of the disiloxane compound a obtained in Synthesis Example 1 (0.06 moles in terms of hydrosilyl functional groups) was added to the mixture, and the resulting mixture was stirred at 60°C for 2 hours. The reaction was judged complete when the peaks corresponding to the allyl groups in the raw materials had completely disappeared in ¹H-NMR measurement and the peaks corresponding to the target substance were detected. After completion of the reaction, the solvent was removed by evaporation at 100°C and a degree of vacuum of 1.3 kPa for 3 hours to thereby obtain a reactive silicon group-containing polyoxyalkylene derivative A-2.

The obtained reactive silicon group-containing polyoxyalkylene derivative A-2 was a light yellow transparent liquid having a number average molecular weight of 8,600 and a viscosity of 2,800 mPa·s.

### [Example 1-3] Synthesis of reactive silicon group-containing polyoxyalkylene derivative A-3

A 200 mL separable flask equipped with a stirrer, a reflux condenser, and a thermometer was charged with 1280 g of α,ω-diallyl-terminated polypropylene glycol having a number average molecular weight of 12,000 (0.2 moles in terms of terminal allyl functional groups) and a toluene solution of a platinum-1,3-divinyl-1,1,3,3-tetramethyldisiloxane complex (in an amount of 50 ppm in terms of platinum), and the mixture was heated to 60°C. 75 g of the disiloxane compound a obtained in Synthesis Example 1 (corresponding to 0.3 moles in terms of hydrosilyl functional groups) was added to the mixture, and the resulting mixture was stirred at 60°C for 2 hours. The reaction was judged complete when the peaks corresponding to the allyl groups in the raw materials had completely disappeared in ¹H-NMR measurement and the peaks corresponding to the target substance were detected. After completion of the reaction, the solvent was removed by evaporation at 100°C and a degree of vacuum of 1.3 kPa for 3 hours to thereby obtain a reactive silicon group-containing polyoxyalkylene derivative A-3.

The obtained reactive silicon group-containing polyoxyalkylene derivative A-3 was a light yellow transparent liquid having a number average molecular weight of 13,000 and a viscosity of 8,000 mPa·s.

### [Example 1-4] Synthesis of reactive silicon group-containing polyoxyalkylene derivative A-4

A 200 mL separable flask equipped with a stirrer, a reflux condenser, and a thermometer was charged with 1280 g of α,ω-diallyl-terminated polypropylene glycol having a number average molecular weight of 12,000 (corresponding to 0.2 moles in terms of terminal allyl functional groups) and a toluene solution of a platinum-1,3-divinyl-1,1,3,3-tetramethyldisiloxane complex (in an amount of 50 ppm in terms of platinum), and the mixture was heated to 60°C. 90 g of the disiloxane compound b obtained in Synthesis Example 2 (corresponding to 0.3 moles in terms of hydrosilyl functional groups) was added to the mixture, and the resulting mixture was stirred at 60°C for 2 hours. The reaction was judged complete when the peaks corresponding to the allyl groups in the raw materials had completely disappeared in ¹H-NMR measurement and the peaks corresponding to the target substance were detected. After completion of the reaction, the solvent was removed by evaporation at 100°C and a degree of vacuum of 1.3 kPa for 3 hours to thereby obtain a reactive silicon group-containing polyoxyalkylene derivative A-4.

The obtained reactive silicon group-containing polyoxyalkylene derivative A-4 was a light yellow transparent liquid having a number average molecular weight of 13,000 and a viscosity of 7,900 mPa·s.

### [Example 1-5] Synthesis of reactive silicon group-containing polyoxyalkylene derivative A-5

A 200 mL separable flask equipped with a stirrer, a reflux condenser, and a thermometer was charged with 1280 g of α,ω-diallyl-terminated polypropylene glycol having a number average molecular weight of 12,000 (corresponding to 0.2 moles in terms of terminal allyl functional groups) and a toluene solution of a platinum-1,3-divinyl-1,1,3,3-tetramethyldisiloxane complex (in an amount of 50 ppm in terms of platinum), and the mixture was heated to 60°C. 97 g of the disiloxane compound c obtained in Synthesis Example 3 (corresponding to 0.3 moles in terms of hydrosilyl functional groups) was added to the mixture, and the resulting mixture was stirred at 60°C for 2 hours. The reaction was judged complete when the peaks corresponding to the allyl groups in the raw materials had completely disappeared in ¹H-NMR measurement and the peaks corresponding to the target substance were detected. After completion of the reaction, the solvent was removed by evaporation at 100°C and a degree of vacuum of 1.3 kPa for 3 hours to thereby obtain a reactive silicon group-containing polyoxyalkylene derivative A-5.

The obtained reactive silicon group-containing polyoxyalkylene derivative A-5 was a light yellow transparent liquid having a number average molecular weight of 13,200 and a viscosity of 8,200 mPa·s.

### [Comparative Example 1-1] Synthesis of reactive silicon group-containing polyoxyalkylene derivative A'-6

A 200 mL separable flask equipped with a stirrer, a reflux condenser, and a thermometer was charged with 100 g of α,ω-diallyl-terminated polypropylene glycol having a number average molecular weight of 7,800 (corresponding to 0.039 moles in terms of terminal allyl functional groups) and a toluene solution of a platinum-1,3-divinyl-1,1,3,3-tetramethyldisiloxane complex (in an amount of 50 ppm in terms of platinum), and the mixture was heated to 60°C. 6 g of methyldimethoxysilane (corresponding to 0.06 moles in terms of hydrosilyl functional groups) was added to the mixture, and the resulting mixture was stirred at 60°C for 2 hours. The reaction was judged complete when the peaks corresponding to the allyl groups in the raw materials had completely disappeared in ¹H-NMR measurement and the peaks corresponding to the target substance were detected. After completion of the reaction, the solvent was removed by evaporation at 100°C and a degree of vacuum of 1.3 kPa for 3 hours to thereby obtain a reactive silicon group-containing polyoxyalkylene derivative A'-6.

The obtained reactive silicon group-containing polyoxyalkylene derivative A'-6 was a light yellow transparent liquid having a number average molecular weight of 8,400 and a viscosity of 2,700 mPa·s.

### [Comparative Example 1-2] Synthesis of reactive silicon group-containing polyoxyalkylene derivative A'-7

A 200 mL separable flask equipped with a stirrer, a reflux condenser, and a thermometer was charged with 100 g of α,ω-diallyl-terminated polypropylene glycol having a number average molecular weight of 7,800 (corresponding to 0.039 moles in terms of terminal allyl functional groups) and 6.6 g of mercaptomethyltrimethoxysilane (corresponding to 0.039 moles in terms of mercapto functional groups), and the mixture was heated to 90°C. Then, 0.1 g of 2,2'-azobis-2-methylbutyronitrile was added to the mixture, and the resulting mixture was stirred at 90°C for 3 hours. The reaction was judged complete when the peaks corresponding to the allyl groups and the mercapto groups in the raw materials had completely disappeared in ¹H-NMR measurement and the peaks corresponding to the target substance were detected.

The obtained reactive silicon group-containing polyoxyalkylene derivative A'-7 was a light yellow transparent liquid having a number average molecular weight of 8,100 and a viscosity of 3,300 mPa·s.

### [Comparative Example 1-3] Synthesis of reactive silicon group-containing polyoxyalkylene derivative A'-8

A 200 mL separable flask equipped with a stirrer, a reflux condenser, and a thermometer was charged with 100 g of α,ω-dihydroxy-terminated polypropylene glycol having a number average molecular weight of 7,600 (corresponding to 0.040 moles in terms of hydroxy terminal groups) and 7.1 g of isocyanatomethyltrimethoxysilane (corresponding to 0.040 moles in terms of isocyanate functional groups), and the mixture was heated to 80°C. Then, 0.1 g of dioctyltin dilaurate was added to the mixture, and the resulting mixture was stirred at 80°C for 3 hours. The reaction was judged complete when the absorption peak corresponding to the isocyanate groups in the raw materials had completely disappeared in IR measurement and the absorption peak corresponding to urethane bonds was detected.

The obtained reactive silicon group-containing polyoxyalkylene derivative A'-8 was a light yellow transparent liquid having a number average molecular weight of 8,000 and a viscosity of 3,700 mPa·s.

### [Comparative Example 1-4] Synthesis of reactive silicon group-containing polyoxyalkylene derivative A'-9

A 200 mL separable flask equipped with a stirrer, a reflux condenser, and a thermometer was charged with 100 g of α,ω-dihydroxy-terminated polypropylene glycol having a number average molecular weight of 7,600 (corresponding to 0.040 moles in terms of hydroxy terminal groups) and 6.1 g (0.040 moles) of tetramethoxysilane, and the mixture was stirred at 80°C for 3 hours. The reaction was judged complete when the absorption peak corresponding to the hydroxy groups in the raw materials had completely disappeared in IR measurement.

The obtained reactive silicon group-containing polyoxyalkylene derivative A'-9 was a colorless transparent liquid having a number average molecular weight of 22,000 and a viscosity of 6,800 mPa·s.

### [3] Production of compositions and cured coatings

### [Example 2-1]

100 Parts by weight of the reactive silicon group-containing polyoxyalkylene derivative A-1 obtained in Example 1-1 and 0.5 parts by weight of a curing catalyst B-1 (2-[3-(trimethoxysilyl)propyl]-1,1,3,3-tetramethylguanidine) were uniformly mixed using a stirrer under moisture-shielded conditions to prepare a composition.

The obtained composition was applied to a glass plate using a bar coater No. 14 in air at 25°C and 50%RH and allowed to dry and cure in air at 25°C and 50%RH for 1 day to produce a cured coating.

### [Examples 2-2 to 2-5 and Comparative Examples 2-1 to 2-4]

A composition and a cured coating were produced using the same procedure as in Example 2-1 except that the reactive silicon group-containing polyoxyalkylene derivative A-1 in Example 2-1 was changed to one of the reactive silicon group-containing polyoxyalkylene derivatives A-2 to A-5 obtained in Examples 1-2 to 1-5 and the reactive silicon group-containing polyoxyalkylene derivatives A'-6 to A'-9 obtained in Comparative Examples 1-1 to 1-4.

### [Example 2-6]

A composition and a cured coating were produced using the same procedure as in Example 2-1 except that the curing catalyst B-1 in Example 2-1 was changed to 5 parts by weight of a curing catalyst B-2 (3-aminopropyltrimethoxysilane).

### [Example 2-7]

A composition and a cured coating were produced using the same procedure as in Example 2-1 except that the curing catalyst B-1 in Example 2-1 was changed to 5 parts by weight of a curing catalyst B-3 (dioctyltin diversatate).

### [Example 2-8]

A composition and a cured coating were produced using the same procedure as in Example 2-1 except that the curing catalyst B-1 in Example 2-1 was changed to 2 parts by weight of a curing catalyst B-4 (titanium diisopropoxy bis(ethylacetoacetate)).

### [Comparative Example 2-5]

A composition and a cured coating were produced using the same procedure as in Comparative Example 2-1 except that the curing catalyst B-1 in Comparative Example 2-1 was changed to 5 parts by weight of the curing catalyst B-2 (3-aminopropyltrimethoxysilane).

### [Comparative Example 2-6]

A composition and a cured coating were produced using the same procedure as in Comparative Example 2-1 except that the curing catalyst B-1 in Comparative Example 2-1 was changed to 5 parts by weight of the curing catalyst B-3 (dioctyltin diversatate).

### [Comparative Example 2-7]

A composition and a cured coating were produced using the same procedure as in Comparative Example 2-2 except that the curing catalyst B-1 in Comparative Example 2-2 was changed to 5 parts by weight of the curing catalyst B-2 (3-aminopropyltrimethoxysilane).

### [Comparative Example 2-8]

A composition and a cured coating were produced using the same procedure as in Comparative Example 2-2 except that the curing catalyst B-1 in Comparative Example 2-2 was changed to 5 parts by weight of the curing catalyst B-3 (dioctyltin diversatate).

The following physical properties of the cured coatings produced above in Examples 2-1 to 2-8 and Comparative Examples 2-1 to 2-8 were evaluated. The results are shown in Tables 1 and 2.

### [Tack-free time]

One of the compositions was applied to a glass plate using the application method described above to obtain a test piece. The test piece was left to stand in air at 25°C and 50%RH to allow moisture curing to proceed, and the time until the coating no longer adhered to a finger pressed against the applied surface was determined. The smaller the determined value, the higher the curability.

### [Yellowing resistance]

A test piece having a cured coating formed on a glass plate using the above-described application method was irradiated with ultraviolet light using a germicidal lamp in air at 25°C and 50%RH for 2 weeks (cumulative irradiation dose: 26,000 mJ/cm³). The degree of yellowing of the resulting cured coating defined as ΔYI (the degree of yellowing = the change in the degree of yellowing YI) was evaluated using a color difference meter based on JIS K 7373. The smaller the determined value, the higher the yellowing resistance.

When ΔYI was less than 0.5, the yellowing resistance was judged to be good and was rated "○." When ΔYI was 0.5 or more, the yellowing resistance was rated "×."

### [Heat resistance]

A test piece having a cured coating formed on a glass plate using the above-described application method was left to stand in a dryer at 150°C for 2 weeks. When no finger mark was left on the coating after the surface of the coating was pressed with a finger, the test piece was rated "○." When a finger mark was left on the coating after the surface of the coating was pressed with a finger, the test piece was rated "×."

**[Table 1]**

| | | Example | | | | | | | |
|---|---|---|---|---|---|---|---|---|---|
| | | 2-1 | 2-2 | 2-3 | 2-4 | 2-5 | 2-6 | 2-7 | 2-8 |
| (A) Reactive silicon group-containing polyoxyalkylene derivative | | A-1 | A-2 | A-3 | A-4 | A-5 | A-1 | A-1 | A-1 |
| (B) Curing catalyst | | B-1 | B-1 | B-1 | B-1 | B-1 | B-2 | B-3 | B-4 |
| Tack-free time | | 30 min | 1 hr | 2 hr | 12 hr | 10 hr | 1 hr | 1 hr | 30 min |
| Yellowing resistance | ΔYI | 0.2 | 0.2 | 0.2 | 0.2 | 0.3 | 0.4 | 0.2 | 0.2 |
| | Rating | ○ | ○ | ○ | ○ | ○ | ○ | ○ | ○ |
| Heat resistance | | ○ | ○ | ○ | ○ | ○ | ○ | ○ | ○ |

**[Table 2]**

| | | Comparative Example | | | | | | | |
|---|---|---|---|---|---|---|---|---|---|
| | | 2-1 | 2-2 | 2-3 | 2-4 | 2-5 | 2-6 | 2-7 | 2-8 |
| (A) Reactive silicon group-containing polyoxyalkylene derivative | | A'-6 | A'-7 | A'-8 | A'-9 | A'-6 | A'-6 | A'-7 | A'-7 |
| (B) Curing catalyst | | B-1 | B-1 | B-1 | B-1 | B-2 | B-3 | B-2 | B-3 |
| Tack-free time | | 1 week | 1 hr | 2 hr | Not cured | Not cured | Not cured | 12 hr | 1 hr |
| Yellowing resistance | ΔYI | 0.2 | 0.2 | 4.4 | - | - | - | 0.4 | 0.1 |
| | Rating | ○ | ○ | × | - | - | - | ○ | ○ |
| Heat resistance | | ○ | × | ○ | - | - | - | × | × |

As shown in Table 1, the cured coatings produced in Examples 2-1 to 2-8 using the reactive silicon group-containing polyoxyalkylene derivatives A-1 to A-5 obtained in Examples 1-1 to 1-5 have good curability, high yellowing resistance, and high heat resistance.

However, as can be seen in Table 2, in Comparative Examples 2-1, 2-5, and 2-6 using the reactive silicon group-containing polyoxyalkylene derivative A'-6 not having the group represented by structural formula (1) above and in Comparative Example 2-4 using the reactive silicon group-containing polyoxyalkylene derivative A'-9 not having the group represented by structural formula (1) above, the curability is poor. In Comparative Examples 2-2, 2-7, and 2-8 using the reactive silicon group-containing polyoxyalkylene derivative A'-7 having sulfide-methylene-silicon bonds, the heat resistance is low. In Comparative Example 2-3 using the reactive silicon group-containing polyoxyalkylene derivative A'-8 having urethane bonds, the yellowing resistance is poor.

## Claims

1. A reactive silicon group-containing polyoxyalkylene derivative comprising a polyoxyalkylene chain terminated at one or both ends with a group represented by the following structural formula (1): 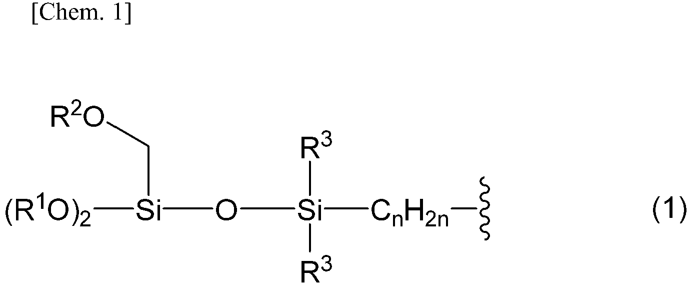 wherein R¹ and R² each independently represent a hydrogen atom, a saturated aliphatic hydrocarbon group having 1 to 10 carbon atoms, or an aryl group having 6 to 10 carbon atoms; each R³ independently represents a saturated aliphatic hydrocarbon group having 1 to 10 carbon atoms or an aryl group having 6 to 10 carbon atoms; n is an integer from 2 to 12; and the wavy line represents a bonding site.

2. The reactive silicon group-containing polyoxyalkylene derivative according to claim 1, wherein the reactive silicon group-containing polyoxyalkylene derivative has a number average molecular weight of 200 to 50,000.

3. A method for producing the reactive silicon group-containing polyoxyalkylene derivative according to claim 1, the method comprising reacting a disiloxane compound represented by the following formula (4) with an alkenyl group-containing polyoxyalkylene derivative having a polyoxyalkylene chain terminated at one or both ends with an alkenyl group having 2 to 12 carbon atoms: 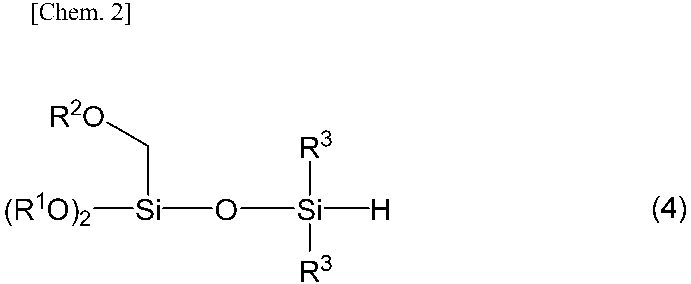 wherein R¹, R², and R³ have the same meanings as defined above.

4. The method for producing the reactive silicon group-containing polyoxyalkylene derivative according to claim 3, wherein the reactive silicon group-containing polyoxyalkylene derivative has a number average molecular weight of 200 to 50,000.

5. A curable composition comprising: (A) the reactive silicon group-containing polyoxyalkylene derivative according to claim 1; and (B) a curing catalyst.

6. The curable composition according to claim 5, wherein the curing catalyst (B) is an amine-based compound.

7. A cured product obtained by curing the curable composition according to claim 5 or 6.

8. A coating agent composition comprising: (A) the reactive silicon group-containing polyoxyalkylene derivative according to claim 1; and (B) a curing catalyst.

9. The coating agent composition according to claim 8, wherein the curing catalyst (B) is an amine-based compound.

10. An article comprising a coating layer formed by curing the coating agent composition according to claim 8 or 9.

11. An adhesive composition comprising: (A) the reactive silicon group-containing polyoxyalkylene derivative according to claim 1; and (B) a curing catalyst.

12. The adhesive composition according to claim 11, wherein the curing catalyst (B) is an amine-based compound.

13. An article comprising a bonding layer formed by curing the adhesive composition according to claim 11 or 12.
